# EUROPEAN PATENT SPECIFICATION

(11) **EP 3 986 692 B1**
(45) Date of publication and mention of the grant of the patent: **19.07.2023**
(21) Application number: 20744101.5
(22) Date of filing: 19.06.2020
(51) Int. Cl.: B29C 48/05, B29C 48/25, B29C 48/285, B29C 48/86, B29C 48/87, B29C 64/118, B29C 64/209, B29C 64/295, B33Y 30/00, B29C 48/30

(54) **A COOLED EXTRUDER, FIXABLE TO A PRINTING CARRIAGE OF A MACHINE FOR QUICK PROTOTYPING WITH THREAD OF FILLER MATERIAL**
GEKÜHLTER EXTRUDER, BEFESTIGBAR AN EINEM DRUCKSCHLITTEN EINER MASCHINE ZUM SCHNELLEN PROTOTYPISIEREN MIT EINEM FADEN AUS FÜLLMATERIAL
EXTRUDEUSE REFROIDIE POUVANT ÊTRE FIXÉE À UN CHARIOT D'IMPRESSION D'UNE MACHINE POUR LE PROTOTYPAGE RAPIDE AVEC UN FIL DE MATÉRIAU DE CHARGE

(30) Priority: 21.06.2019 IT 201900009828
(43) Date of publication of application: 27.04.2022
(73) Proprietor: Roboze S.p.A., 70124 Bari (BA) (IT)
(72) Inventor: LORUSSO, Alessio, 70124 Bari (IT)
(74) Representative: Fezzardi, Antonio
(86) International application number: PCT/IB2020/055792
(87) International publication number: WO 2020/255069

(56) References cited:
- EP-A1- 2 329 935
- WO-A1-2017/008789
- US-A1- 2012 070 523
- US-A1- 2017 190 105
- US-A1- 2018 290 365

## Description

The present invention relates to the sector of machines for quick prototyping, commonly referred to as "3D printers".

More specifically, it relates to a cooled extruder, particularly adapted for 3D printing using materials with a high melting point. WO 2017/008 789 A1 discloses such an extrusion-based 3D printer.

Used inside additive production systems, the extruder is the machine element intended to create the change of state of the thread from solid to viscoelastic, allowing the material to be deposited in layers.

During the extrusion process, the material is carried inside the extruder by a drive system, the temperature reached in the extruder allows the change of state of the material, which will be deposited layer by layer on the printing plane.

One currently known problem of 3D printers regards the maximum working temperature for the extruder, and this results in the drawback, that at present, materials with a relatively low melting point are used: both for problems of cooling the extruder and for problems of collecting the pressed piece.

It is the main object of the extruder, the subject of the present invention, to allow 3D printing using both technical polymers with high melting points (peek) and technical polymers loaded with carbon or glass balls with a high-temperature matrix.

This and other objects will be better understood from the following description and with reference to the attached figures, which show, by way of an illustrative and non-limiting example, preferred embodiments of the invention, with some variations.

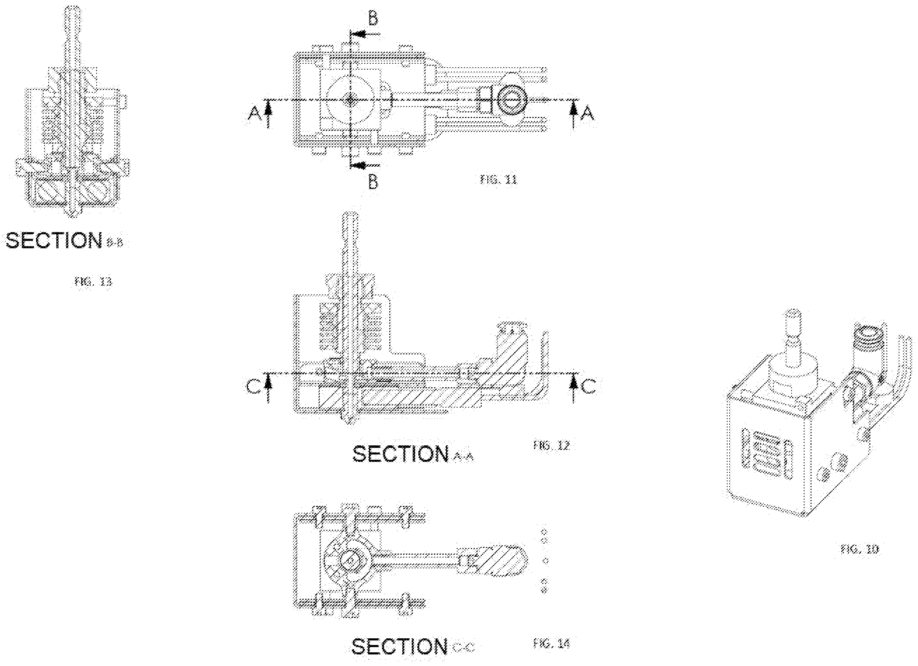

In the drawings:
figure 1 is a longitudinal section of a first embodiment of the extruder according to the present invention;
figures 1A and 1B show two relative enlarged details indicated with the letters "E", "F" in fig. 1, respectively:
   - "E" for the packing of the components for the seal of leakages of the molten material,
   - "F" for the zone with small outer transversal dimensions with the flow of cooling air;

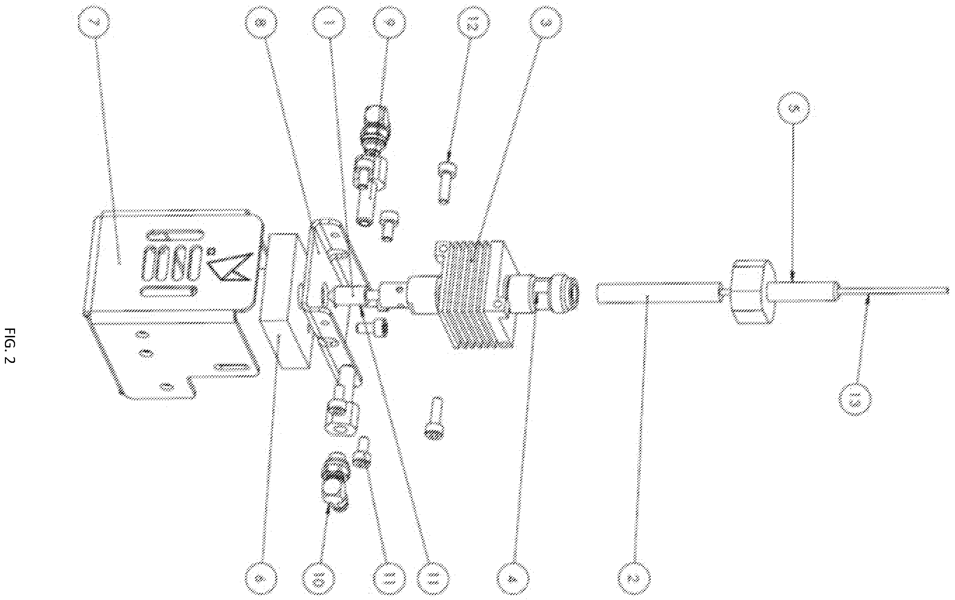

figure 2 is an exploded view of the extruder corresponding to the section in fig. 1;
figure 3 is a section similar to the one in fig. 1, which shows a first variation of the invention, wherein the small conveyor tube made of a ceramic material is absent;
figure 4 is a section similar to the one in fig. 1, which shows a second variation of the invention, wherein both the small conveyor tube made of a ceramic material and the outer straw are absent;
figure 5 is a section similar to the one in fig. 1, which shows a second embodiment of the invention, wherein the nozzle of the extruder is directly removable from the bottom without needing to dismantle other components of the extruder;
figure 6 shows an enlarged detail indicated with letter "G" in fig. 1 relating to the interior of the end part of the nozzle;
figures 7, 8 and 9 show variations of the detail G in fig. 6, indicated with letter G', G" and G‴ respectively;
figure 10 is a 3d view of a third embodiment of the invention, wherein only one cooling air conveyor is included;
figures from 11 to 14, corresponding to fig. 10, show, respectively: a plan view and a longitudinal sectional view according to a trace plane A-A in Fig. 11, a transversal sectional view according to a trace plane B-B in Fig. 11, and a longitudinal sectional view according to a trace plane C-C in Fig. 12.

With reference to the figures indicated above, the extruder, the subject of the present invention, is provided with a body assembled integrally to the printing carriage, substantially formed by a plurality of components assembled rigidly to one another.

According to the present invention, the extrusion is guaranteed by the combination of:
- means for controlled and localized heating,
- means for blowing air at a low temperature and predetermined flow rate, determined on the basis of experimental tests,
- a channel (or conduit) for supplying the thread of melting material, conveniently configured to improve the flowability;

The various components, which contribute to forming the body of the extruder, will be examined below in detail.
- Nozzle 1: it is a substantially cylindrical element in which the melting of the material and the conveying of the material on the printing plane take place. Such nozzle 1 is integral with the heating block 6, preferably by means of a thread.

In the described embodiment, the material of the nozzle 1 is stainless steel, such as, for example, Aisi 303, which has high wear resistance, corrosion resistance and good workability. At the melting zone, the conduit in which the thread 13 of filler material slides is processed internally with a surface finishing from 0.2 to 2.5 µm, which ensures a good flowability of the material, reducing surface adhesion and risks of vulcanization of the material. The melting zone is preferably an integral part of the nozzle, to avoid leakages of molten material between the joints.

It is worth noting that, according to the present invention, the nozzle 1 can be made not only of stainless steel, but also of other materials adapted for the purpose, such as, for example, tungsten carbide.

According to a particular feature of the invention, before the melting zone (which is the section of the nozzle 1 in which the melting of the thread of filler material 13 takes place) the body of the nozzle 1 has a zone in which the outer transversal dimensions thereof are smaller, and external air is conveyed onto such a zone. In this way, the limited mass of material, which conducts heat present in such a zone with small outer dimensions, combined with the cooling air hitting it from the outside, is adapted to lower the temperature of the nozzle 1 drastically in the section of transition from the zone of melting to that of loading the filler material, thus ensuring a thermal equilibrium to avoid the thread from dilating due to the increase in temperature, causing the melting and therefore the extrusion to be interrupted.
- **Small tube 2:** the component of the extruder, which acts as a conveyor for the thread and preferably is made of Alumina. This material has a good thermal stability, excellent hardness, excellent wear resistance, good thermal insulation.

The good thermal insulation, which characterizes the small tube 2 made of alumina, has been specifically comprised for the purpose of ensuring a correct equilibrium between the heat it receives from the nozzle 1 - with which it is in direct contact - and the heat dissipated towards the external environment. Basically, the small tube 2 acts as a thermal buffer, proving indispensable in this application, where the working temperatures exceed 400°C, to avoid the thread 13 from dilating in the loading zone with the consequent undesired blocking of the thread.
- **Heat sink made of aluminum 3:** the high thermal conductivity of the aluminum allows the heat sink 3 to remove the heat from the surface of the outer straw 4 more effectively and disperse it towards the surrounding environment by means of special dissipation flaps, thus allowing an adequate thermal equilibrium to be achieved and maintained. The shape and processings of this component have been studied with the aim of increasing the thermal exchange surface in a reduced space. Furthermore, the heat sink 3 is also screwed onto the corresponding zone of the nozzle 1, which is situated therein.
- **Outer straw 4:** this component holds the small ceramic tube 2 internally for the thread 13 to flow, while externally it is screwed to the heat sink 3. The material of such a straw 4 is preferably Aisi 303, The high thermal conductivity of this material, with respect to Alumina, allows and favors the transfer of heat from the inner small tube 2 to the outer heat sink 3.
- **Extruder connection 5:** allows the extrusion assembly to be rigidly constrained to the printing carriage and it is screwed to the outer straw 4. Such connection 5 of the extruder has an inner ledge, which ensures the packing of the small ceramic tube 2 against the nozzle 1, preventing the molten material from exiting the connection orifices.
- **Heating block 6:** this component comprises heating elements, a temperature detection sensor and a block made of Steel, which contains said heating elements and onto which the nozzle 1 is screwed 1, to which the heat produced by said heating elements is transferred by conduction. Externally, such heating block 6 is protected by a layer of insulating material, such as, for example, "Areogel", to limit the dissipation of heat externally, thus improving the efficiency of the heating block. It is interesting to note that the presence of this insulation is also important to avoid, or at least reduce the undesired heating of the material newly pressed by the extruder.

The length of the heating block 6 can vary preferably, but not exclusively, from 8 to 30 mm. The shape thereof is not important, it can be cylindrical or parallelepiped or polygonal or polyhedral.
- **Cover made of steel 7:** together with the protective/cover plate 8 it keeps the extruder fixed, allows the connection of the air conveyors and acts as a container for the insulating material (such as, as a non-limiting example Aereogel). Furthermore, it facilitates and favors the protection of the piece, which has just been pressed or is being pressed, from the high temperatures generated by the heating block 6.
- **Cooling air conveyors 9:** each of these directs and channels the compressed air flow directly into the outer transversal constriction zone of the nozzle 1. According to a particular feature of the invention - in order to interrupt the transition of heat from the melting zone to the loading zone of the thread 13 - preferably, the cooling air is conveyed into the section straddling the end of the loading zone and the beginning of the zone with small outer transversal dimensions.
- **Connections 10:** the elements for connecting said conveyors 9 to the tubes, which supply the compressed air.
- **Screws 11-12:** screws for the mutual fastening of the various parts.
- **Thread 13:** thread of filler material
- **Compressed air 14**: the pressure of the compressed air is at 2-10 bar, with a flow rate from 5 to 40 l/min.

### Conclusions:

The geometry of the nozzle, combined with the flow of cooling air and the small tube 2 made of alumina, allows the extruder to work at high temperatures, in excess of 400°C, ensuring the extrusion of the material, thus avoiding occlusions of the supply channel.

As is shown clearly in the drawings, according to the present invention, the components of the extruder are included to define, as a whole thereof, a channel or conduit for the thread 13 of filler material to pass, crossing it from the inlet to the outlet.

The materials used have also been selected, besides from a thermal point of view, to extend the duration of the extruder over time, also with the use of loaded materials.

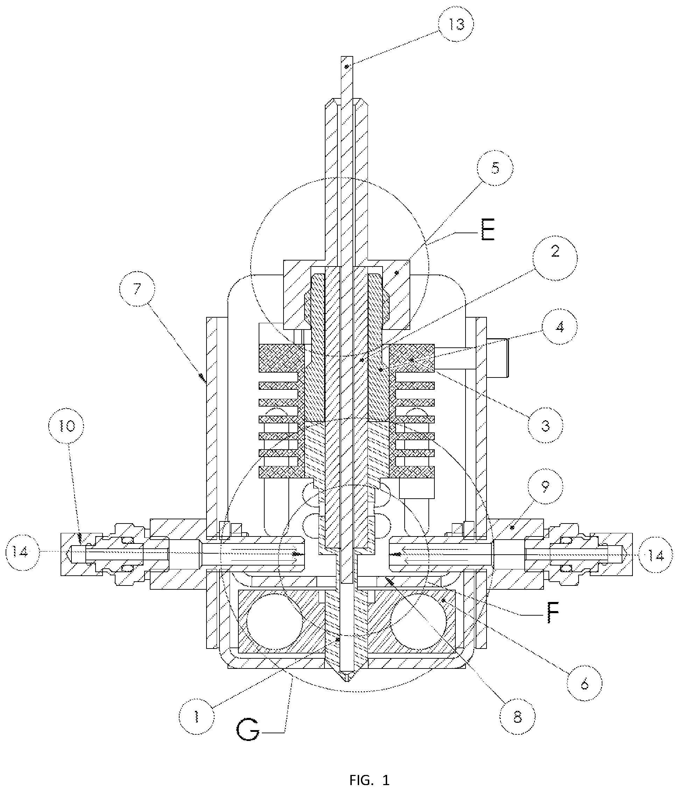

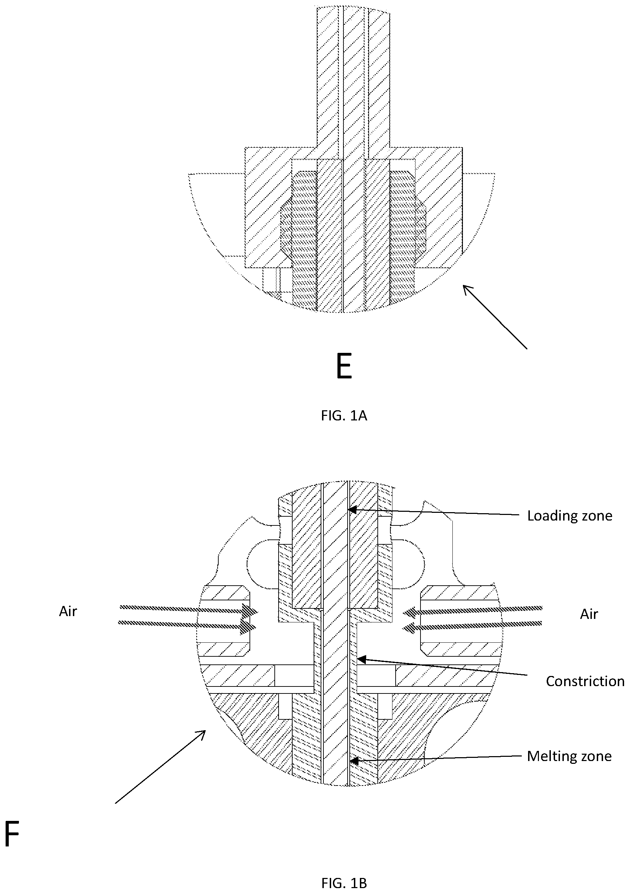

It is also worth noting that, as is clearly shown in figure 1, the nozzle 1, the small tube 2 made of alumina, the heat sink 3, the outer straw 4 and the connection 5 of the extruder, are all assembled and compacted coaxially with one another, so that the thread of filler material 13 can pass therein without undesired jamming or deviations: from the inlet in a solid state to the outlet hole of the nozzle 1, from which it exits in a viscoelastic or fluid state.

Furthermore, the proximal part of the nozzle and the distal part of the outer straw 4, which are adjacent to each other, are screwed to the heat sink, so that when the connection 5 of the extruder is screwed and tightened to the proximal part of the straw 4, the small tube 2 is axially pressed between the ledge of the straw 4 at one end thereof and the ledge present in the nozzle 1 at the opposite end thereof, thus avoiding potential leakages or spillages of the molten material inside the extruder.

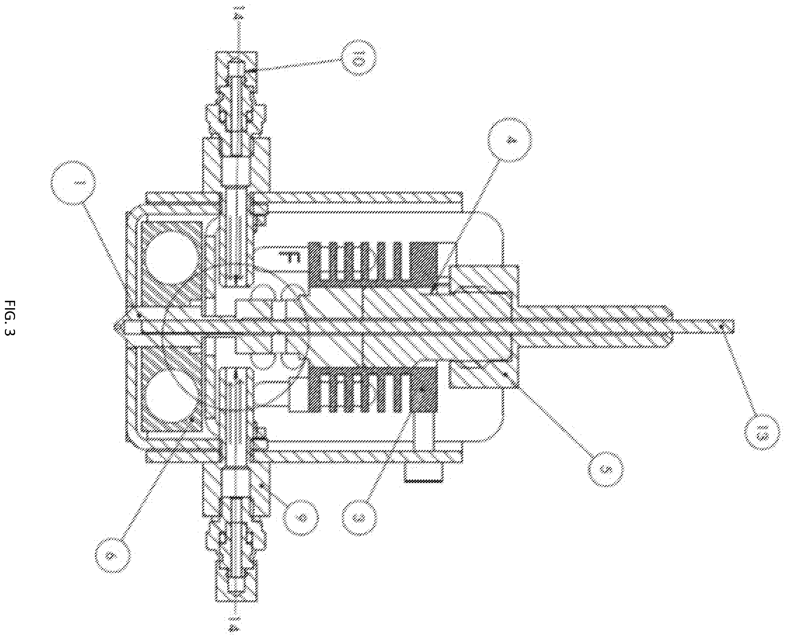

In the first variation of the invention shown in figure 3, the small tube 2 made of a ceramic material is absent and the thread slides directly into the outer straw 4 and into the nozzle 1.

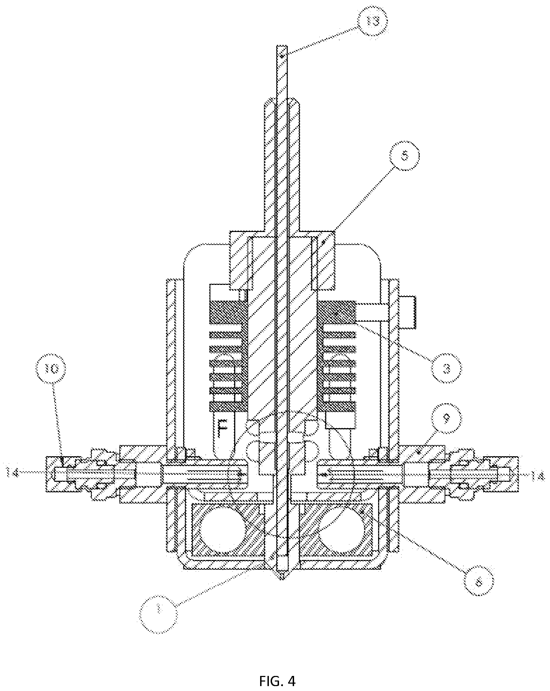

The second variation of the invention, shown in figure 4, is even simpler than the previous one because it is also devoid of the outer straw and the body of the nozzle 1 covers the entire extruder and is screwed directly to the upper connection 5.

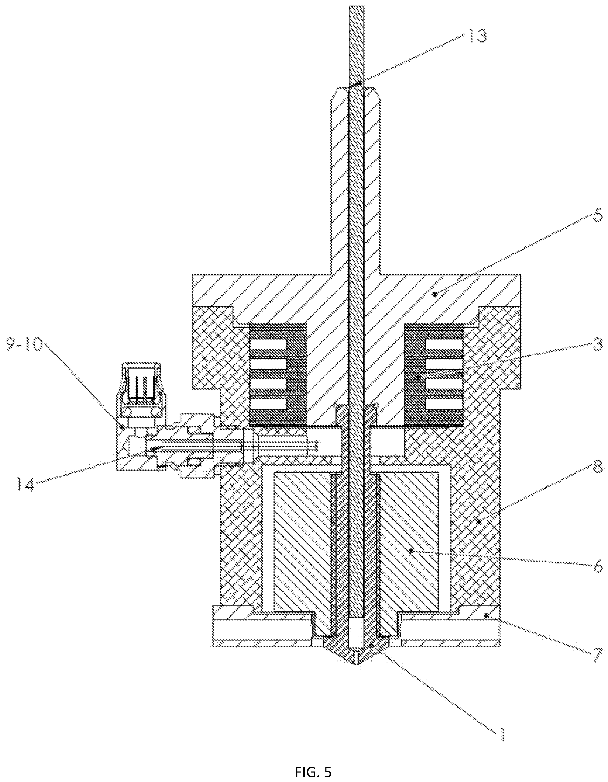

A second embodiment of the invention, shown in figure 5, includes a configuration of the nozzle, which makes it removable directly from the bottom without needing to dismantle any other component of the extruder. For such a purpose, the proximal part of the nozzle is fastened directly to the base of the connection 5, which also includes the heat sink 3.

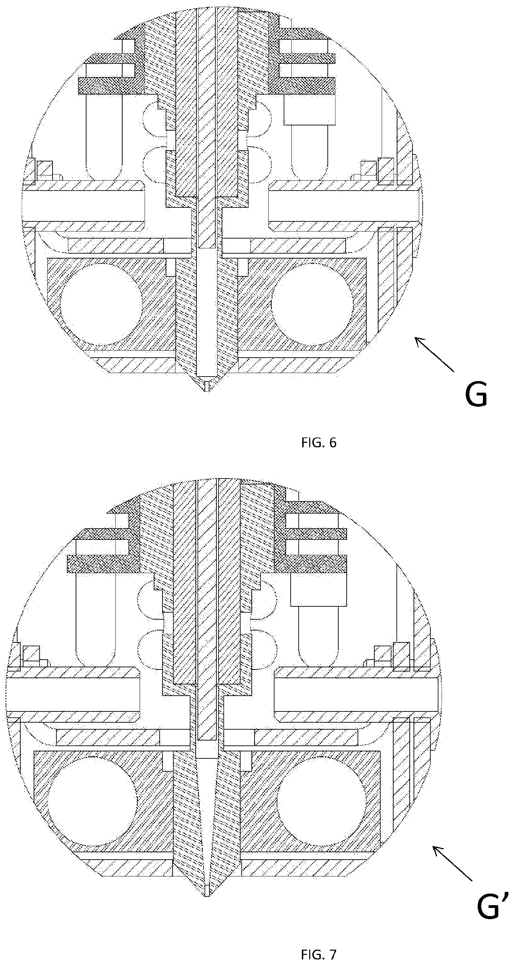

Finally, with reference to figures 6, 7 and 8, it is interesting to note that the inner conformation of the end section of the nozzle 1 can have different configurations and geometries, which may be useful particularly for extruding high-viscosity polymers.

The detail G in figure 1 is shown in figure 6, in which it is possible to see that the inner conduit of the end part of the nozzle is cylindrical like the previous section of the conduit.

A first variation, indicated with G' in figure 7, comprises that said end section, before the outlet hole of the filler material, is substantially conical.

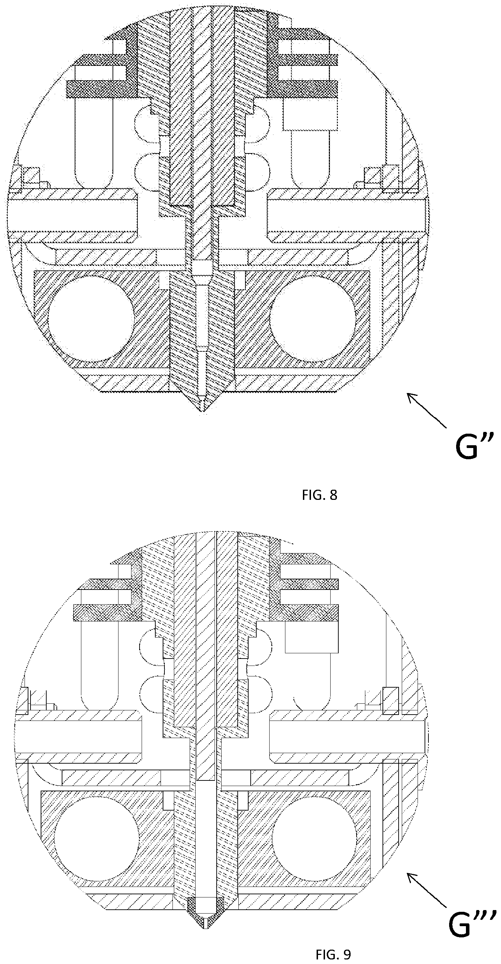

A second variation, indicated with G" in figure 8, comprises that said end section, before the outlet hole of the filler material, is provided with at least three different diameters, decreasing gradually towards the outlet.

Clearly, the number of inner diameters and the diameter of the thread used could also be different depending on the needs.

In a non-limiting embodiment, the inner diameters for the nozzle of the extrusion head can be divided in this manner:
- diameter 2 mm
- diameter 1.2 mm
- diameter 0.8 mm
- diameter 0.4 mm (towards the outlet)

The diameter of 2 mm accommodates the filament (which can have a diameter of 1.75 mm) and it starts to melt it so that the filament continues to slide, passing through the various diameters, always reducing the viscosity thereof and increasing the flow velocity until it exits the last diameter of 0.4mm.

According to the present invention, the measurement of the diameters inside the nozzle of the extrusion head preferably has the following reference ranges:
- initial inlet diameter equal to 2.5mm ± 1
- first intermediate diameter 1.2mm ± 0.3
- second intermediate diameter 0.8mm ± 0.35
- outlet end diameter 0.4mm ± 0.35.

Finally, with particular reference to a third variation, indicated with G‴ in figure 9, it is worth noting that for the purpose of increasing wear resistance and to improve the flowability of the filler material, at least the end part of the inner conduit of the nozzle could also be provided with an insert made of ruby or tungsten carbide (or another material adapted for the purpose), or with an opportune surface treatment, such as, for example, nitriding or nickel-plating.

With reference to the figures from 10 to 14, a third embodiment of the invention includes only one conveyor 9 for supplying the cooling air, which is intended to direct and channel the compressed air flow directly to the outer transversal constriction zone of the nozzle 1, wherein a channeling is also included, configured to channel the cooling air all around said outer transversal constriction zone of the nozzle (1) and to let out said air from the side opposite to the conveyor 9.

### KEY

- 1: Nozzle
- 2: Small tube conveyor thread
- 3: Aluminum heat sink
- 4: Outer straw
- 5: Extruder connection
- 6: Heating block
- 7: Cover
- 8: Cover plate
- 9: Air conveyor
- 10: L-connection-M5-Pipe 6
- 11: IS0 4762 M3 x 6 - 6N
- 12: IS0 4762 M3 x 10 - 10N
- 13: Thread of filler material
- 14: Compressed air (for example at 2-10 bar and 5-40 l/min)

## Claims

1. An extrusion system comprising a cooled extruder, fixable to a printing carriage of a machine for quick prototyping with thread of filler material (13), **characterized in that** it comprises, in combination:
- means for the controlled and localized heating of the thread of filler material (13),
- means for blowing compressed air onto a zone of the extruder to be cooled, placed immediately upstream of the melting zone, with a predetermined flow rate determinable on the basis of experimental tests,
- a channel, or conduit, for supplying the thread of filler material (13), conveniently configured to improve the flowability of the thread of filler material therein;
wherein said extruder includes a nozzle (1), the body of which is provided with a melting zone in which the melting of the thread of filler material (13) takes place, and with an outlet end for conveying the material on a printing plane; said nozzle (1) being integral with a heating block (6);
wherein said nozzle (1) is made of a material having high wear resistance, corrosion resistance and good workability;
and wherein, at least at the melting zone of said nozzle (1), the conduit inside which the thread of filler material (13) slides, is processed internally with a surface finishing having a roughness from 0.2 to 2.5 µm or less, which ensures a good flowability of the material, reducing or preventing surface adhesion and risks of vulcanization of the material; wherein the localized flow of cooling air allows the extruder to work at high temperatures, higher that 400°C, ensuring the extrusion of the material, preventing blocking of the supply channel; wherein the pressure of the compressed air (14) is from 2 to 10 bar, with a flow rate from 5 at 40 l/min.

2. An extrusion system according to the preceding claim, **characterized in that**, before the melting zone, the body of the nozzle (1) has a zone having smaller outer transversal dimensions than the rest of the nozzle, and **in that** said blowing means convey the compressed air onto such a zone; thus obtaining that the limited mass of material of the nozzle body which conducts heat present in such a zone with small outer dimensions, combined with the cooling air hitting said zone from the outside, are adapted to lower the temperature of the nozzle (1) drastically in the section of transition from the zone of loading the thread of filler material (13) to that of melting it, thus ensuring a thermal equilibrium to avoid the thread from dilating due to the increase in temperature, thus causing the melting and therefore the extrusion to be interrupted.

3. An extrusion system according to one or more of the preceding claims, **characterized in that** said extruder comprises a small tube (2) which acts as a conveyor for the thread of filler material (13) and is preferably made of Alumina or other ceramic material having good thermal stability, excellent hardness, excellent wear resistance and good thermal insulation; the good thermal insulation given by the small tube (2) being provided in order to ensure a correct equilibrium between the heat that it receives from the nozzle (1) - with which it is in direct contact - and the heat dissipated towards the external environment, thus obtaining that the small tube (2) acts as a thermal buffer to avoid the thread of filler material (13) from dilating in a loading zone, with the consequent undesired blocking of the thread itself.

4. An extrusion system according to one or more of the preceding claims, **characterized in that** said extruder comprises a heat sink (3) made of high thermal conductivity material, such as aluminum, for example, for removing the heat more effectively and dispersing it towards the surrounding environment by means of special dissipation flaps, thus allowing an adequate thermal equilibrium to be achieved and maintained; said heat sink (3) being constrained to the nozzle (1).

5. An extrusion system according to claims 3 and 4, **characterized in that** said extruder comprises an outer straw (4) which holds the small ceramic tube (2) internally for the thread of filler material (13) to flow, while externally it is constrained to the heat sink (3); the material of such a straw (4) having high thermal conductivity, to allow and favor the transfer of heat from the small inner tube (2) towards the outer heat sink (3).

6. An extrusion system according to the preceding claim, **characterized in that** said extruder comprises an extruder connection (5), which is firmly constrainable to the pressing carriage, which is screwed to the outer straw (4); wherein said extruder connection (5) has an inner ledge for ensuring the packing of the small ceramic tube (2) against the nozzle (1), thus avoiding the molten material from exiting from the connection orifices.

7. An extrusion system according to one or more of the preceding claims, **characterized in that** said extruder comprises a heating block (6) provided with heating elements, a temperature detection sensor and a block made of Steel, which contains said heating elements and on which the nozzle (1) is fixed, to which the heat produced by said heating elements is transferred by conduction.

8. An extrusion system according to the preceding claim, **characterized in that** such a heating block (6) is externally protected by a layer of insulating material, such as "Aerogel", for example, for limiting the heat dissipation outwards thus improving the efficiency of the heating of the block itself; wherein the presence of this insulation is also important for avoiding or reducing the undesired heating of the material just pressed by the extruder.

9. An extrusion system according to the preceding claim, **characterized in that** the length of the heating block (6) is preferably, but not exclusively, from 8 to 30 mm; wherein the shape of such a block (6) is cylindrical or parallelepiped or polygonal or polyhedral.

10. An extrusion system according to at least one of claims 7 to 9, **characterized in that** said extruder comprises a steel cover (7), which - along with a cover/protective plate (8) - is configured for the connection of the air blowing means and to act as a container for the insulating material, such as "Aerogel", for example; said cover (7) and said plate (8) facilitating and favoring the protection of the just pressed piece or piece being pressed against the high temperatures generated by the heating block (6).

11. An extrusion system according to one or more of the preceding claims, **characterized in that** said blowing means comprise one or more cooling air conveyers (9), each of which is designed to direct and channel the compressed air flow directly into the outer transversal constriction zone of the nozzle (1).

12. An extrusion system according to the preceding claim, **characterized in that** - in order to interrupt the transition of heat from the melting zone to the loading zone of the thread of filler material (13) - the cooling air is conveyed into the section straddling the end of the loading zone and the beginning of the zone with small outer transversal dimensions.

13. An extrusion system according to claim 3, **characterized in that** the geometry of the nozzle (1), combined with the cooling air flow and the small tube (2) made of alumina, allows the extruder to work at high temperatures, higher than 400°C, ensuring the extrusion of the material, thus avoiding occlusions of the supply channel.

14. An extrusion system according to one or more of the preceding claims, **characterized in that** the components of the extruder define, as a whole, a channel or conduit for the thread of filler material (13) to pass, crossing it from the inlet to the outlet.

15. An extrusion system according to claims 3 to 6, **characterized in that** the proximal part of the nozzle (1) and the distal part of the outer straw (4), adjacent to each other, are screwed to the heat sink (3), so that when the connection (5) of the extruder is screwed and tightened to the proximal part of the straw (4) itself, the small tube (2) is axially pressed between the ledge of the straw (4) at one end thereof and the ledge present in the nozzle (1) at the opposite end thereof, thus avoiding potential spillages or leakages of molten material inside the extruder.

16. An extrusion system according to claim 1 or 2, **characterized in that** the thread of filler material (13) slides directly into an outer straw (4) and into the nozzle (1), without further intermediate components.

17. An extrusion system according to claim 1 or 2, **characterized in that** the body of the nozzle (1) spans the entire extruder and is screwed directly to an upper connection (5); wherein the thread of filler material (13) slides directly into the connection (5) and into the nozzle (1) without further intermediate components.

18. An extrusion system according to claim 1 or 2, **characterized in that** the body of the nozzle (1) is configured to be directly removable from the bottom without needing to dismantle any other component of the extruder; for such a purpose, the proximal end of the nozzle (1) is directly fixed to the base of a connection (5), which also includes a heat sink (3).

19. An extrusion system according to one or more of the preceding claims, **characterized in that** the components of the extruder are all assembled and compacted coaxially with one another, so that the thread of the filler material (13) can pass therein without undesired jamming or deviations: from the inlet in a solid state to the outlet hole of the nozzle (1), from which it exits in a viscoelastic or fluid state.

20. An extrusion system according to one or more of the preceding claims, **characterized in that** the inner conduit of the end part of the nozzle (1) is cylindrical (G) like the previous section of the conduit itself, or it is substantially conical (G'), or it is provided with at least three different diameters gradually decreasing (G") towards the outlet.

21. An extrusion system according to the preceding claim, **characterized in that** the inner diameters of the end part (G' ') of the nozzle (1) are thus divided:
- diameter 2 mm
- diameter 1.2 mm
- diameter 0.8 mm
- diameter 0.4 mm
wherein the greater diameter receives the filament, which can have a diameter of 1.75 mm, where the melting starts so that the filament slides in the different diameters, while the viscosity thereof decreases and the flow speed increases until exiting from the last smaller diameter.

22. An extrusion system according to claim 20, **characterized in that** the inner diameters of the end section (G") of the nozzle (1) have the following reference ranges:
- larger diameter equal to 2.5 mm ± 1
- first intermediate diameter 1.2 mm ± 0.3
- second intermediate diameter 0.8 mm ± 0.35
- outlet end diameter 0.4 mm ± 0.35.

23. An extrusion system according to one or more of the preceding claims, **characterized in that** said nozzle (1) is made of stainless steel, such as Aisi 303, for example, or other materials adapted for the purpose, such as tungsten carbide, for example.

24. An extrusion system according to one or more of the preceding claims, **characterized in that** the end part of the inner conduit of the nozzle is provided with an insert made of ruby or tungsten carbide (or other material adapted for the purpose), or with an opportune surface treatment, such as nitriding or nickel-plating, for example.

25. An extrusion system according to one or more of the preceding claims, **characterized in that** said blowing means comprise a conveyor (9) for the cooling air, which is intended to direct and channel the compressed air flow directly into the outer transversal constriction zone of the nozzle (1), wherein a channeling is also comprised, which is configured to channel the cooling air all around said outer transversal constriction zone of the nozzle (1) and let out said air from the side opposite to the conveyor (9).

## Patentansprüche

1. Extrusionssystem, umfassend einen gekühlten Extruder, der an einem Druckschlitten einer Maschine zum schnellen Prototypisieren mit einem Faden aus Füllmaterial (13) befestigbar ist, **dadurch gekennzeichnet, dass** es in Kombination umfasst:
- Mittel für das gesteuerte und lokalisierte Erhitzen des Fadens aus Füllmaterial (13),
- Mittel zum Blasen von Druckluft auf eine zu kühlende Zone des Extruders, die unmittelbar stromaufwärts von der Schmelzzone platziert sind, mit einer vorherbestimmten Durchflussrate, die auf der Basis von Versuchstests bestimmbar ist,
- einen Kanal, oder eine Leitung, zum Zuführen des Fadens aus Füllmaterial (13), der zweckmäßig dafür ausgelegt ist, um die Fließfähigkeit des Fadens aus Füllmaterial darin zu verbessern;
wobei der genannte Extruder eine Düse (1) aufweist, deren Körper mit einer Schmelzzone versehen ist, in der das Schmelzen des Fadens aus Füllmaterial (13) stattfindet, und mit einem Auslassende zum Befördern des Materials auf einer Druckebene; wobei die genannte Düse (1) einteilig ist mit einem Heizblock (6);
wobei die genannte Düse (1) aus einem Material mit hoher Verschleißfestigkeit, Korrosionsbeständigkeit und guter Bearbeitungsfähigkeit besteht;
und wobei, mindestens in der Schmelzzone der genannten Düse (1), die Leitung, innerhalb welcher der Faden aus Füllmaterial (13) gleitet, innen mit einer Oberflächenbehandlung mit einer Rauigkeit von 0,2 bis 2,5 µm oder weniger bearbeitet ist, was eine gute Fließfähigkeit des Materials sicherstellt, wobei eine Oberflächenadhäsion und Risken einer Vulkanisierung des Materials reduziert oder verhindert werden; wobei der lokalisierte Strom von Kühlluft es gestattet, dass der Extruder bei hohen Temperaturen, höher als 400 °C, arbeitet, wodurch die Extrusion des Materials sichergestellt wird, wodurch die Blockierung des Zufuhrkanals verhindert wird; wobei der Druck der Druckluft (14) von 2 bis 10 bar beträgt, mit einer Durchflussrate von 5 bis 40 l/min.

2. Extrusionssystem nach dem vorhergehenden Anspruch, **dadurch gekennzeichnet, dass**, vor der Schmelzzone, der Körper der Düse (1) eine Zone mit kleineren äußeren Querabmessungen aufweist als der Rest der Düse, und dadurch, dass die genannten Gebläsemittel die Druckluft auf eine solche Zone befördern; wodurch erhalten wird, dass die begrenzte Masse an Material des Düsenkörpers, die in einer solchen Zone mit kleineren äußeren Abmessungen vorhandene Wärme leitet, kombiniert mit der Kühlluft, die von der Außenseite auf die genannte Zone trifft, dafür geeignet sind, die Temperatur der Düse (1) drastisch in der Sektion des Übergangs von der Zone des Ladens des Fadens aus Füllmaterial (13) zu jener des Schmelzens davon zu senken, wobei so ein Wärmegleichgewicht sichergestellt wird, um zu vermeiden, dass sich der Faden aufgrund der Erhöhung der Temperatur dehnt, wodurch bewirkt wird, dass das Schmelzen und daher die Extrusion unterbrochen werden.

3. Extrusionssystem nach einem oder mehreren der vorhergehenden Ansprüche, **dadurch gekennzeichnet, dass** der genannte Extruder ein kleines Rohr (2) umfasst, das als Förderer für den Faden aus Füllmaterial (13) wirkt und vorzugsweise aus Aluminiumoxid oder einem anderen keramischen Material mit guter Wärmestabilität, ausgezeichneter Härte, ausgezeichneter Verschleißfestigkeit und guter Wärmeisolierung besteht; wobei die gute Wärmisolierung durch das kleine Rohr (2) gegeben ist, das bereitgestellt ist, um ein korrektes Gleichgewicht zwischen der Wärme, die es von der Düse (1) empfängt - mit der es in direktem Kontakt steht -, und der Wärme, die zu der äußeren Umgebung abgeleitet wird, sicherzustellen, wobei so erhalten wird, dass das kleine Rohr (2) als Wärmepuffer wirkt, um zu vermeiden, dass sich der Faden aus Füllmaterial (13) in einer Ladezone dehnt, mit der folgenden unerwünschten Blockierung des Fadens selbst.

4. Extrusionssystem nach einem oder mehreren der vorhergehenden Ansprüche, **dadurch gekennzeichnet, dass** der genannte Extruder eine Wärmesenke (3) umfasst, die aus einem Material mit hoher Wärmeleitfähigkeit, wie zum Beispiel Aluminium, besteht, um die Wärme effektiver abzuführen und sie zu der umliegenden Umgebung mit Hilfe von speziellen Ableitungsklappen zu verteilen, wodurch es gestattet wird, ein adäquates Wärmegleichgewicht zu erzielen und aufrechtzuerhalten; wobei die genannte Wärmesenke (3) an die Düse (1) gebunden ist.

5. Extrusionssystem nach den Ansprüchen 3 und 4, **dadurch gekennzeichnet, dass** der genannte Extruder ein äußeres Röhrchen (4) umfasst, welches das kleine Keramikrohr (2) intern hält, damit der Faden aus Füllmaterial (13) fließt, während es extern an die Wärmesenke (3) gebunden ist; wobei das Material eines solchen Röhrchens (4) eine hohe Wärmeleitfähigkeit aufweist, um den Transfer von Wärme von dem kleinen inneren Rohr (2) zu der äußeren Wärmesenke (3) zu gestatten und zu begünstigen.

6. Extrusionssystem nach dem vorhergehenden Anspruch, **dadurch gekennzeichnet, dass** der genannte Extruder eine Extruderverbindung (5) umfasst, die fest an den Druckschlitten gebunden werden kann, der an das äußere Röhrchen (4) geschraubt ist; wobei die genannte Extruderverbindung (5) eine Innenkante aufweist, um das Packen des kleinen Keramikrohrs (2) gegen die Düse (1) sicherzustellen, wodurch vermieden wird, dass das geschmolzene Material aus den Verbindungsöffnungen austritt.

7. Extrusionssystem nach einem oder mehreren der vorhergehenden Ansprüche, **dadurch gekennzeichnet, dass** der genannte Extruder eine Heizblock (6) umfasst, welcher mit Heizelementen, einem Temperaturdetektionssensor und einem aus Stahl bestehenden Block versehen ist, der die genannten Heizelemente enthält und auf dem die Düse (1) befestigt ist, zu der die von den genannten Heizelementen erzeugte Wärme durch Leitung transferiert wird.

8. Extrusionssystem nach dem vorhergehenden Anspruch, **dadurch gekennzeichnet, dass** ein solcher Heizblock (6) extern durch eine Schicht aus Isoliermaterial, wie zum Beispiel "Aerogel", geschützt ist, um die Wärmeableitung nach außen zu begrenzen, wodurch die Effizienz des Heizens des Blocks selbst verbe3ssert wird; wobei das Vorliegen dieser Isolierung auch wichtig ist, um das unerwünschte Erhitzen des Materials zu vermeiden oder zu reduzieren, das gerade von dem Extruder gepresst wird.

9. Extrusionssystem nach dem vorhergehenden Anspruch, **dadurch gekennzeichnet, dass** die Länge des Heizblocks (6) vorzugsweise, jedoch nicht ausschließlich von 8 bis 30 mm beträgt; wobei die Form eines solchen Blocks (6) zylindrisch oder parallelepipedisch oder polygonal oder polyedrisch ist.

10. Extrusionssystem nach mindestens einem der Ansprüche 7 bis 9, **dadurch gekennzeichnet, dass** der genannte Extruder eine Stahlabdeckung (7) umfasst, die - zusammen mit einer Abdeck/Schutzplatte (8) - für die Verbindung der Luftgebläsemittel ausgelegt ist, und um als Behälter für das Isoliermaterial, wie zum Beispiel "Aerogel", zu wirken; wobei die genannte Abdeckung (7) und die genannte Platte (8) den Schutz des gerade gepressten Stücks oder des Stücks, das gepresst wird, gegen die hohen Temperaturen erleichtert oder begünstigt, die von dem Heizblock (6) erzeugt werden.

11. Extrusionssystem nach einem oder mehreren der vorhergehenden Ansprüche, **dadurch gekennzeichnet, dass** die genannten Gebläsemittel einen oder mehrere Kühlluftförderer (9) umfassen, von denen jeder dafür ausgebildet ist, um den Druckluftstrom direkt in die äußere Querverengungszone der Düse (1) zu richten und zu kanalisieren.

12. Extrusionssystem nach dem vorhergehenden Anspruch, **dadurch gekennzeichnet, dass** - um den Übergang von Wärme von der Schmelzzone in die Ladezone des Fadens aus Füllmaterial (13) zu unterbrechen - die Kühlluft in die Sektion befördert wird, die das Ende der Ladezone und den Beginn der Zone mit kleinen äußeren Querabmessungen übergreift.

13. Extrusionssystem nach Anspruch 3, **dadurch gekennzeichnet, dass** die Geometrie der Düse (1), kombiniert mit dem Kühlluftstrom und dem kleinen Rohr (2), das aus Aluminiumoxid besteht, es dem Extruder gestattet, bei hohen Temperaturen, höher als 400 °C, zu arbeiten, wobei die Extrusion des Materials sichergestellt wird, wodurch Okklusionen des Zufuhrkanals vermieden werden.

14. Extrusionssystem nach einem oder mehreren der vorhergehenden Ansprüche, **dadurch gekennzeichnet, dass** die Komponenten des Extruders, insgesamt, einen Kanal oder eine Leitung definieren, damit der Faden aus Füllmaterial (13) hindurchgehen kann, wobei er ihn oder sie vom Einlass zum Auslass durchquert.

15. Extrusionssystem nach den Ansprüchen 3 bis 6, **dadurch gekennzeichnet, dass** der proximale Teil der Düse (1) und der distale Teil des äußeren Röhrchens (4), die einander benachbart sind, an die Wärmesenke (3) geschraubt sind, so dass, wenn die Verbindung (5) des Extruders an den proximalen Teil des Röhrchens (4) selbst geschraubt und festgezogen ist, das kleine Rohr (2) axial zwischen die Kante des Röhrchens (4) an einem Ende davon und die Kante gepresst wird, die in der Düse (1) an dem gegenüberliegenden Ende davon vorhanden ist, wodurch ein potentielles Auslaufen oder Lecken von geschmolzenem Material innerhalb des Extruders vermieden wird.

16. Extrusionssystem nach Anspruch 1 oder 2, **dadurch gekennzeichnet, dass** der Faden aus Füllmaterial (13) direkt in ein äußeres Röhrchen (4) und in die Düse (1) gleitet, ohne weitere dazwischenliegende Komponenten.

17. Extrusionssystem nach Anspruch 1 oder 2, **dadurch gekennzeichnet, dass** der Körper der Düse (1) den gesamten Extruder überspannt und direkt an eine obere Verbindung (5) geschraubt ist; wobei der Fasen aus Füllmaterial (13) direkt in die Verbindung (5) und in die Düse (1) gleitet, ohne weitere dazwischenliegende Komponenten.

18. Extrusionssystem nach Anspruch 1 oder 2, **dadurch gekennzeichnet, dass** der Körper der Düse (1) dafür ausgelegt ist, um direkt von dem Boden entfernbar zu sein, ohne irgendeine andere Komponente des Extruders abnehmen zu müssen; wobei für einen solchen Zweck das proximale Ende der Düse (1) direkt an der Basis einer Verbindung (5) befestigt ist, die auch eine Wärmesenke (3) aufweist.

19. Extrusionssystem nach einem oder mehreren der vorhergehenden Ansprüche, **dadurch gekennzeichnet, dass** die Komponenten des Extruders alle koaxial miteinander zusammengefügt und kompaktiert sind, so dass der Faden aus Füllmaterial (13) darin ohne unerwünschtes Verklemmen oder Abweichungen hindurchgehen kann: von dem Einlass in einem festen Zustand zu dem Auslassloch der Düse (1), aus der er in einem viskoelastischen oder fluiden Zustand austritt.

20. Extrusionssystem nach einem oder mehreren der vorhergehenden Ansprüche, **dadurch gekennzeichnet, dass** die innere Leitung des Endteils der Düse (1) zylindrisch (G) ist wie die vorherige Sektion der Leitung selbst, oder sie im Wesentlichen konisch (G') ist, oder sie mit mindestens drei verschiedenen Durchmessern versehen ist, die allmählich zu dem Auslass hin abnehmen (G").

21. Extrusionssystem nach dem vorhergehenden Anspruch, **dadurch gekennzeichnet, dass** die Innendurchmesser des Endteils (G") der Düse (1) so aufgeteilt sind:
- Durchmesser 2 mm
- Durchmesser 1,2 mm
- Durchmesser 0,8 mm
- Durchmesser 0,4 mm
wobei der größere Durchmesser das Filament aufnimmt, das einen Durchmesser von 1,75 mm aufweisen kann, wobei das Schmelzen derart startet, dass das Filament in die verschiedenen Durchmesser gleitet, während die Viskosität davon abnimmt und die Durchflussgeschwindigkeit zunimmt, bis es aus dem letzten kleineren Durchmesser austritt.

22. Extrusionssystem nach Anspruch 20, **dadurch gekennzeichnet, dass** die Innendurchmesser der Endsektion (G") der Düse (1) die folgenden Referenzbereiche aufweisen:
- größerer Durchmesser gleich 2,5 mm ± 1
- erster Zwischendurchmesser 1,2 mm ± 0,3
- zweiter Zwischendurchmesser 0,8 mm ± 0,35
- Auslassenddurchmesser 0,4 mm ± 0,35.

23. Extrusionssystem nach einem oder mehreren der vorhergehenden Ansprüche, **dadurch gekennzeichnet, dass** die genannte Düse (1) aus rostfreiem Stahl, wie zum Beispiel Aisi 303, oder anderen Materialien besteht, die für den Zweck geeignet sind, wie zum Beispiel Wolframcarbid.

24. Extrusionssystem nach einem oder mehreren der vorhergehenden Ansprüche, **dadurch gekennzeichnet, dass** der Endteil der inneren Leitung der Düse mit einem Einsatz versehen ist, der aus Rubin oder Wolframcarbid (oder aus einem anderen Material, das für den Zweck geeignet ist) besteht, oder mit einer angemessenen Oberflächenbehandlung, wie zum Beispiel Nitrieren oder Nickelplattieren.

25. Extrusionssystem nach einem oder mehreren der vorhergehenden Ansprüche, **dadurch gekennzeichnet, dass** die genannten Gebläsemittel einen Förderer (9) für die Kühlluft umfassen, der dazu bestimmt ist, den Druckluftstrom direkt in die äußere Querverengungszone der Düse (1) zu richten und zu kanalisieren, wobei eine Kanalisierung auch umfasst ist, die dafür ausgelegt ist, um die Kühlluft um die gesamte genannte äußere Querverengungszone der Düse (1) zu kanalisieren und die genannte Luft aus der Seite gegenüber dem Förderer (9) auszulassen.

## Revendications

1. Système d'extrusion comprenant une extrudeuse refroidie, pouvant être fixée à un chariot d'impression d'une machine de prototypage rapide avec un fil de matériau de charge (13), **caractérisé en ce qu'**il comprend, en combinaison :
- des moyens de chauffage commandé et localisé du fil de matériau de charge (13),
- des moyens de soufflage d'air comprimé sur une zone de l'extrudeuse à refroidir, placée immédiatement en amont de la zone de fusion, avec un débit prédéterminé pouvant être déterminé sur la base d'essais expérimentaux,
- un canal, ou conduit, d'alimentation en fil de matériau de charge (13), configuré de façon pratique pour y améliorer la coulabilité du fil de matériau de charge ; dans lequel ladite extrudeuse comporte une buse (1), dont le corps est doté d'une zone de fusion dans laquelle a lieu la fusion du fil de matériau de charge (13), et d'une extrémité de sortie pour transporter le matériau sur un plan d'impression ; ladite buse (1) étant d'un seul tenant avec un bloc chauffant (6) ;
dans lequel ladite buse (1) est réalisée en un matériau ayant une résistance élevée à l'usure, une résistance à la corrosion et une bonne aptitude au façonnage ;
et dans lequel, au moins au niveau de la zone de fusion de ladite buse (1), le conduit à l'intérieur duquel glisse le fil de matériau de charge (13), est traité intérieurement avec une finition de surface ayant une rugosité de 0,2 à 2,5 µm ou moins, qui assure une bonne coulabilité du matériau, réduisant ou empêchant une adhérence de surface et des risques de vulcanisation du matériau ; dans lequel l'écoulement localisé d'air de refroidissement permet à l'extrudeuse de fonctionner à des températures élevées, plus élevées que 400 °C, assurant l'extrusion du matériau, empêchant l'obstruction du canal d'alimentation ; dans lequel la pression de l'air comprimé (14) est de 2 à 10 bars, avec un débit de 5 à 40 l/min.

2. Système d'extrusion selon la revendication précédente, **caractérisé en ce que**, avant la zone de fusion, le corps de la buse (1) a une zone ayant des dimensions transversales externes plus petites que le reste de la buse, et **en ce que** lesdits moyens de soufflage transportent l'air comprimé sur une telle zone ; obtenant ainsi que la masse de matériau limitée du corps de buse qui conduit la chaleur présente dans une telle zone avec des dimensions externes plus petites, combinée à l'air de refroidissement frappant ladite zone depuis l'extérieur, soit adaptée pour abaisser radicalement la température de la buse (1) dans la section de transition de la zone de chargement du fil de matériau de charge (13) à celle de sa fusion, assurant ainsi un équilibre thermique pour éviter que le fil ne se dilate en raison de l'augmentation de température, provoquant ainsi la fusion et par conséquent l'interruption de l'extrusion.

3. Système d'extrusion selon une ou plusieurs des revendications précédentes, **caractérisé en ce que** ladite extrudeuse comprend un petit tube (2) qui sert de transporteur pour le fil de matériau de charge (13) et est réalisé préférentiellement en alumine ou en un autre matériau céramique ayant une bonne stabilité thermique, une excellente dureté, une excellente résistance à l'usure et une bonne isolation thermique ; la bonne isolation thermique donnée par le petit tube (2) étant prévue afin d'assurer un équilibre correct entre la chaleur qu'il reçoit de la buse (1) - avec laquelle il est en contact direct - et la chaleur dissipée vers l'environnement extérieur, obtenant ainsi que le petit tube (2) serve de tampon thermique pour éviter que le fil de matériau de charge (13) ne se dilate dans une zone de chargement, avec l'obstruction indésirable résultante du fil lui-même.

4. Système d'extrusion selon une ou plusieurs des revendications précédentes, **caractérisé en ce que** ladite extrudeuse comprend un dissipateur de chaleur (3) réalisé en un matériau à haute conductivité thermique, tel que l'aluminium, par exemple, pour éliminer la chaleur plus efficacement et la disperser vers l'environnement alentour au moyen de volets de dissipation spéciaux, permettant ainsi d'atteindre et de conserver un équilibre thermique adéquat ; ledit dissipateur de chaleur (3) étant contraint sur la buse (1).

5. Système d'extrusion selon les revendications 3 et 4, **caractérisé en ce que** ladite extrudeuse comprend une paille (4) externe qui maintient le petit tube (2) en céramique intérieurement pour que le fil de matériau de charge (13) s'écoule, tandis qu'extérieurement il est contraint sur le dissipateur de chaleur (3), le matériau d'une telle paille (4) ayant une haute conductivité thermique, pour permettre et favoriser le transfert de chaleur depuis le petit tube (2) interne vers le dissipateur de chaleur (3) externe.

6. Système d'extrusion selon la revendication précédente, **caractérisé en ce que** ladite extrudeuse comprend un raccord d'extrudeuse (5), qui peut être fermement contraint sur le chariot presseur, qui est vissé sur la paille (4) externe ; dans lequel ledit raccord d'extrudeuse (5) a un rebord interne pour assurer le tassement du petit tube (2) en céramique contre la buse (1), évitant ainsi que le matériau fondu ne sorte des orifices de raccord.

7. Système d'extrusion selon une ou plusieurs des revendications précédentes, **caractérisé en ce que** ladite extrudeuse comprend un bloc chauffant (6) doté d'éléments chauffants, un capteur de détection de température et un bloc réalisé en acier, qui contient lesdits éléments chauffants et sur lequel la buse (1) est fixée, auquel la chaleur produite par lesdits éléments chauffants est transférée par conduction.

8. Système d'extrusion selon la revendication précédente, **caractérisé en ce qu'**un tel bloc chauffant (6) est protégé extérieurement par une couche de matériau isolant, tel que l'« Aérogel », par exemple, pour limier la dissipation de chaleur vers l'extérieur, améliorant ainsi l'efficacité du chauffage du bloc lui-même ; dans lequel la présence de cette isolation est également importante pour éviter ou réduire le chauffage indésirable du matériau venant d'être pressé par l'extrudeuse.

9. Système d'extrusion selon la revendication précédente, **caractérisé en ce que** la longueur du bloc chauffant (6) est préférentiellement, mais non exclusivement, de 8 à 30 mm ; dans lequel la forme d'un tel bloc (6) est cylindrique ou parallélépipédique ou polygonale ou polyédrique.

10. Système d'extrusion selon au moins l'une des revendications 7 à 9, **caractérisé en ce que** ladite extrudeuse comprend un couvercle en acier (7), qui - avec un couvercle/une plaque de protection (8) - est configuré pour le raccordement des moyens de soufflage d'air et pour servir de contenant pour le matériau isolant, tel que l'« Aérogel », par exemple ; ledit couvercle (7) et ladite plaque (8) facilitant et favorisant la protection de la pièce venant d'être pressée ou de la pièce en cours de pressage vis-à-vis de températures élevées générées par le bloc chauffant (6).

11. Système d'extrusion selon une ou plusieurs des revendications précédentes, **caractérisé en ce que** lesdits moyens de soufflage comprennent un ou plusieurs transporteurs d'air de refroidissement (9), dont chacun est conçu pour diriger et canaliser l'écoulement d'air comprimé directement dans la zone de resserrement transversale externe de la buse (1).

12. Système d'extrusion selon la revendication précédente, **caractérisé en ce que** - afin d'interrompre la transition de chaleur de la zone de fusion à la zone de chargement du fil de matériau de charge (13) - l'air de refroidissement est transporté dans la section chevauchant la fin de la zone de chargement et le début de la zone avec de petites dimensions transversales externes.

13. Système d'extrusion selon la revendication 3, **caractérisé en ce que** la géométrie de la buse (1), combinée à l'écoulement d'air de refroidissement et du petit tube (2) réalisé en alumine, permet à l'extrudeuse de fonctionner à des températures élevées, plus élevées que 400 °C, assurant l'extrusion du matériau, évitant ainsi des occlusions du canal d'alimentation.

14. Système d'extrusion selon une ou plusieurs des revendications précédentes, **caractérisé en ce que** les composants de l'extrudeuse définissent, dans l'ensemble, un canal ou conduit pour faire passer le fil de matériau de charge (13), le croisant de l'entrée à la sortie.

15. Système d'extrusion selon les revendications 3 à 6, **caractérisé en ce que** la partie proximale de la buse (1) et la partie distale de la paille (4) externe, adjacentes l'une à l'autre, sont vissées sur le dissipateur de chaleur (3), de sorte que, lorsque le raccord (5) de l'extrudeuse est vissé et serré sur la partie proximale de la paille (4) elle-même, le petit tube (2) soit pressé axialement entre le rebord de la paille (4) à une extrémité de celle-ci et le rebord présent dans la buse (1) à l'extrémité opposée de celle-ci, évitant ainsi des renversements ou des fuites potentiels de matériau fondu à l'intérieur de l'extrudeuse.

16. Système d'extrusion selon la revendication 1 ou 2, **caractérisé en ce que** le fil de matériau de charge (13) glisse directement dans une paille (4) externe et dans la buse (1), sans composant intermédiaire supplémentaire.

17. Système d'extrusion selon la revendication 1 ou 2, **caractérisé en ce que** le corps de la buse (1) couvre l'extrudeuse entière et est vissé directement sur un raccord (5) supérieur ; dans lequel le fil de matériau de charge (13) glisse directement dans le raccord (5) et dans la buse (1) sans composant intermédiaire supplémentaire.

18. Système d'extrusion selon la revendication 1 ou 2, **caractérisé en ce que** le corps de la buse (1) est configuré pour pouvoir être enlevé directement du fond sans nécessiter le démontage de tout autre composant de l'extrudeuse ; à cette fin, l'extrémité proximale de la buse (1) est fixée directement sur la base d'un raccord (5), qui comporte également un dissipateur de chaleur (3).

19. Système d'extrusion selon une ou plusieurs des revendications précédentes, **caractérisé en ce que** les composants de l'extrudeuse sont tous assemblés et compactés coaxialement les uns aux autres, de sorte que le fil du matériau de charge (13) puisse passer à l'intérieur sans blocage ou écarts indésirables : de l'entrée dans un état solide au trou de sortie de la buse (1), d'où il sort dans un état viscoélastique ou fluide.

20. Système d'extrusion selon une ou plusieurs des revendications précédentes, **caractérisé en ce que** le conduit interne de la partie d'extrémité de la buse (1) est cylindrique (G) comme la section précédente du conduit lui-même, ou bien il est sensiblement conique (G'), ou il est doté d'au moins trois diamètres différents diminuant progressivement (G") vers la sortie.

21. Système d'extrusion selon la revendication précédente, **caractérisé en ce que** les diamètres internes de la partie d'extrémité (G") de la buse (1) sont divisés ainsi :
- diamètre 2 mm
- diamètre 1,2 mm
- diamètre 0,8 mm
- diamètre 0,4 mm
dans lequel le diamètre plus grand reçoit le filament, qui peut avoir un diamètre de 1,75 mm, où la fusion débute de sorte que le filament glisse dans les différents diamètres, tandis que sa viscosité diminue et la vitesse d'écoulement augmente jusqu'à ce qu'il sorte du dernier diamètre plus petit.

22. Système d'extrusion selon la revendication 20, **caractérisé en ce que** les diamètres internes de la section d'extrémité (G") de la buse (1) ont les plages de référence suivantes :
- diamètre plus grand égal à 2,5 mm ± 1
- premier diamètre intermédiaire 1,2 mm ± 0,3
- deuxième diamètre intermédiaire 0,8 mm ± 0,35
- diamètre d'extrémité de sortie 0,4 mm ± 0,35.

23. Système d'extrusion selon une ou plusieurs des revendications précédentes, **caractérisé en ce que** ladite buse (1) est réalisée en acier inoxydable, tel que Aisi 303, par exemple, ou en d'autres matériaux adaptés à cette fin, tels que le carbure de tungstène, par exemple.

24. Système d'extrusion selon une ou plusieurs des revendications précédentes, **caractérisé en ce que** la partie d'extrémité du conduit interne de la buse est dotée d'une pièce rapportée réalisée en rubis ou en carbure de tungstène (ou en un autre matériau adapté à cette fin), ou d'un traitement de surface opportun, tel que la nitruration ou le placage au nickel, par exemple.

25. Système d'extrusion selon une ou plusieurs des revendications précédentes, **caractérisé en ce que** lesdits moyens de soufflage comprennent un transporteur (9) pour l'air de refroidissement, qui est destiné à diriger et à canaliser l'écoulement d'air comprimé directement dans la zone de resserrement transversale externe de la buse (1), dans lequel une canalisation est également comprise, qui est configurée pour canaliser l'air de refroidissement tout autour de ladite zone de resserrement transversale externe de la buse (1) et pour laisser sortir ledit air depuis le côté à l'opposé du transporteur (9).
